(19) **Europäisches Patentamt** / **European Patent Office** / **Office européen des brevets**

(11) **EP 3 038 275 B1**

(12) **FASCICULE DE BREVET EUROPEEN**

(45) Date de publication et mention
de la délivrance du brevet:
**22.01.2020 Bulletin 2020/04**

(51) Int Cl.:
***H04B 7/185*** *(2006.01)*  ***H04W 56/00*** *(2009.01)*
***H04B 7/26*** *(2006.01)*

(21) Numéro de dépôt: **15201682.0**

(22) Date de dépôt: **21.12.2015**

(54) **PROCEDE DE SYNCHRONISATION DE SIGNAUX DANS UNE LIAISON SATELLITE ET TERRESTRE ET ARCHITECTURE ASSOCIEE**

VERFAHREN ZUR SIGNALSYNCHRONISIERUNG IN EINER SATELLITEN- UND BODENVERBINDUNG, UND ENTSPRECHENDE ARCHITEKTUR

METHOD FOR SYNCHRONISING SIGNALS IN A SATELLITE-TERRESTRIAL LINK AND ASSOCIATED ARCHITECTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2014 FR 1402969**

(43) Date de publication de la demande:
**29.06.2016 Bulletin 2016/26**

(73) Titulaire: **THALES**
**92400 Courbevoie (FR)**

(72) Inventeurs:
• **RATINEY, Marc**
**31100 Toulouse (FR)**
• **VAN WAMBEKE, Nicolas**
**31100 Toulouse (FR)**
• **GADAT, Benjamin**
**31100 Toulouse (FR)**

(74) Mandataire: **Priori, Enrico**
**Marks & Clerk France**
**Immeuble "Visium"**
**22, avenue Aristide Briand**
**94117 Arcueil Cedex (FR)**

(56) Documents cités:
**EP-A1- 1 819 067      EP-A2- 0 845 874
WO-A1-98/09390      US-A1- 2003 122 705
US-A1- 2009 116 543**

**Description**

L'invention se situe dans le domaine des télécommunications, et plus particulièrement dans le domaine des systèmes de télécommunications dédiés au contrôle-commande de drones.

Elle vise à proposer un procédé permettant de synchroniser les instants d'arrivée de communications en provenance d'un réseau satellitaire et d'un réseau sans fil terrestre et à destination d'un terminal utilisateur.

L'invention décrit l'architecture d'un système de transmission hybride satellite/terrestre mettant en œuvre le procédé.

L'insertion d'aéronefs sans aucune personne à bord, ou drones, dans l'espace aérien est actuellement limitée à des espaces appropriés, dits « ségrégués », de manière à limiter les risques d'incidents. Les espaces ségrégués sont des espaces réservés, souvent militaires, soumis à des règles spécifiques, et dans lesquels ne viennent pas s'insérer d'équipements civils, comme des aéronefs d'aviation civile ou commerciale.

L'ouverture de l'espace aérien non-ségrégué aux drones pose de nombreux problèmes technologiques, comme celui de la fiabilité des mécanismes d'anticollision, ou celui de la fiabilité des systèmes de télécommunication utilisés pour le contrôle-commande. Les systèmes de télécommunication utilisés devront donc répondre à des critères stricts en termes de performances (taux d'erreur paquets, latence du réseau, débit utile, continuité et disponibilité de service).

Afin de répondre à ces fortes exigences, il est possible de redonder les moyens de communication, en utilisant par exemple un réseau principal satellitaire et un réseau secondaire terrestre.

Deux stratégies de gestion de la redondance des moyens de communications sont alors possible.

La première stratégie consiste à transmettre via un seul réseau principal et à basculer les communications vers un réseau secondaire en cas de défaillance. Cette solution nécessite la détection de la défaillance du réseau principal, et le rétablissement des communications en cours sur le réseau secondaire.

L'inconvénient d'une telle solution est que le système est indisponible pendant le temps de détection de la défaillance et pendant le temps de rétablissement de la communication via le réseau secondaire. La disponibilité du système est donc dégradée. Suivant la durée d'interruption du service, la défaillance peut être considérée comme un évènement de perte de continuité du service.

De plus, suivant le mécanisme de redondance mis en œuvre, les paquets en cours de transmission via le réseau principal peuvent être perdus et devront être retransmis par le réseau secondaire. La défaillance induira donc une latence de transmission plus importante. La gigue de latence sera donc également plus importante.

Enfin, suivant le mécanisme de redondance choisi, le rétablissement des communications sur le réseau secondaire peut nécessiter des échanges protocolaires avec les terminaux. Dans ce cas le rétablissement des communications n'est pas transparent pour les utilisateurs. Comme tous les utilisateurs du réseau principal sont impactés par la défaillance, le mécanisme de rétablissement des communications va provoquer un pic d'utilisation du réseau pour les échanges protocolaires. Suivant le dimensionnement du système, ce pic peut entrainer un engorgement du système et dans tous les cas induira une latence plus importante.

Cette stratégie n'est donc pas adaptée pour le contrôle-commande de drones.

La seconde stratégie consiste à transmettre le trafic en parallèle via les deux réseaux, et à supprimer les blocs dupliqués à la réception. L'avantage d'une telle solution est qu'en cas de défaillance d'un des réseaux, la communication n'est pas interrompue et continue via le réseau disponible. La disponibilité du service et la continuité du service ne sont donc pas impactées par la défaillance d'un des réseaux. La défaillance d'un réseau est transparente pour les utilisateurs et ne nécessite pas d'échanges protocolaires.

L'inconvénient de cette seconde solution est qu'en mode nominal elle nécessite deux fois plus de bande passante sur l'air et dans les réseaux.

De manière à limiter l'occupation de la bande passante, et pour réduire le coût des équipements, il est connu d'utiliser les mêmes fréquences pour communiquer avec le réseau satellite et le réseau terrestre.

Il est connu des mécanismes, comme celui décrit dans la Demande Internationale WO 98/09390 A1, permettant de synchroniser deux réseaux entre eux. Cependant, dans cette demande, le trafic à destination du terminal utilisateur n'est pas transmis en parallèle via les deux réseaux. Au contraire, le terminal utilisateur commute entre l'un et l'autre des réseaux à des instants prédéterminés, et ne reçoit jamais de messages depuis les deux réseaux simultanément. La synchronisation se fait donc au niveau des trames, et non des instants de réception des messages.

Le document « Hybrid Satellite/Terrestrial Coopérative Relaying Stategies for DVB-SH based Communication Systems » propose d'utiliser le standard DVB-SH (terme anglais pour Digital Video Broadcasting - Satellite Handheld) dans un système hybride composé d'un réseau satellitaire, et d'un ou plusieurs réseaux terrestres chargés de relayer, sur la même fréquence, le message transmis par le réseau satellitaire.

Le standard DVB-SH utilise une forme d'onde de type OFDM (terme anglais pour Orthogonal Frequency-Divison Multiplexing, ou multiplexage par répartition orthogonale en fréquence) associée à des turbo codes et à un mécanisme de MRC (terme anglais pour Maximum Radio Combining, ou combinaison à rapport maximal) afin de recombiner les signaux au niveau du terminal utilisateur.

Le signal transmis depuis le réseau terrestre est retardé par rapport au signal transmis depuis le réseau satellitaire. L'utilisation de la modulation OFDM permet de compenser les retards de transmission, et de recombiner les deux signaux.

Un principe comparable est décrit dans les demandes de brevet US 2009/0116543 A1 et EP 1819067 A1.

Cependant, ce mécanisme n'est pas adapté pour les modes d'accès nécessitant une forte synchronisation entre les signaux, tels que le TDMA (terme anglais pour Time Division Multiple Access, ou accès multiple à répartition temporelle), ou le WCDMA (terme anglais pour Wideband Code Division Multiple Access, ou multiplexage par code à large bande.

De plus, le retard entre le signal transmis par le réseau satellitaire et le signal transmis par le réseau terrestre, peut de plus être important. Ce retard est compatible avec l'utilisation d'une modulation OFDM, mais pas forcément avec des formes d'ondes ayant des possibilité de compensation des retards plus limitées, comme les formes d'ondes à égaliseur temporel, ou les formes d'onde étalées associées à des récepteurs Rake.

La compatibilité d'un système de communication hybride satellitaire/terrestre avec des modes d'accès de type TDMA ou WCDMA, ou l'utilisation de modulations autres que les modulations OFDM nécessite donc de synchroniser l'ensemble des réseaux utilisés, de manière à ce que les messages transmis par le réseau terrestre et le réseau satellitaire arrivent de manière synchrone au terminal utilisateur.

Le standard GSM (terme anglais pour Global System for Mobile Communications, ou groupe spécial mobile) propose un mécanisme de synchronisation dans un réseau comprenant une station de base et une pluralité d'utilisateurs. Pour ceci, un décalage temporel devant être appliqué par chacun des terminaux utilisateurs est calculé par la station de base, de manière à ce que les signaux transmis soient synchronisés lorsqu'ils atteignent la station de base.

Cependant, un tel fonctionnement est incompatible lors de l'ajout d'un second réseau, car cela nécessiterait d'appliquer deux décalages temporels différents au niveau des terminaux utilisateurs.

De même, mettre en œuvre un tel mécanisme de synchronisation au niveau d'un terminal utilisateur exclurait la mise en œuvre de plusieurs terminaux utilisateurs dans le même réseau.

L'invention consiste donc à proposer un procédé de synchronisation permettant d'asservir l'ensemble des références temporelles des équipements d'un réseau de communications à celle de la station satellite, et permettant de calculer un offset à appliquer aux transmissions depuis la station terrestre. Le but du procédé consiste en ce que les signaux en provenance de la station satellite et de la station terrestre atteignent le terminal utilisateur de manière synchrone.

Ainsi, la mise en œuvre du procédé permet l'utilisation simultanée de la liaison satellite et de la liaison terrestre, dans un système de communications utilisant des modes d'accès de type TDMA ou WCDMA, ou transmettant simultanément sur les deux liaisons en utilisant des formes d'onde ayant des capacités de tolérance à des retards de propagation inférieures à celles de l'OFDM.

L'invention s'applique aux systèmes de communication comportant un lien terrestre et un lien satellite à destination d'un aéronef ou d'un drone, mais peut également s'appliquer à tout type de communication nécessitant la synchronisation de l'instant d'arrivée de messages en provenance de deux ou plus réseaux de communication.

L'invention consiste donc un procédé de synchronisation de la transmission de messages dans un système de communication comprenant un terminal utilisateur, un réseau principal de communication vers ledit terminal utilisateur comprenant une première station, et un réseau secondaire de communication vers ledit terminal utilisateur comprenant une seconde station, destiné à être exécuté sur ladite première station comportant une référence temporelle. Le procédé est caractérisé en ce qu'il comprend les étapes de :

1) émission d'un premier signal de synchronisation vers ledit terminal utilisateur et ladite seconde station,

2) mesure de l'instant de réception d'un deuxième signal de synchronisation émis par le terminal utilisateur suite à la réception dudit premier signal de synchronisation, et d'un troisième signal de synchronisation émis par la seconde station suite à la réception dudit premier signal de synchronisation, et calcul d'un premier intervalle temporel à partir de ces instants de réception,

3) transmission dudit premier intervalle temporel calculé vers ladite seconde station, et

4) émission d'un quatrième signal de synchronisation vers ladite seconde station.

L'invention consiste également en un procédé de synchronisation de la transmission de messages dans un système de communication comprenant un terminal utilisateur, un réseau principal de communication vers ledit terminal utilisateur comprenant une première station, et un réseau secondaire de communication vers ledit terminal utilisateur comprenant une seconde station, destiné à être exécuté sur ladite seconde station comportant une référence temporelle, caractérisé en ce qu'il comprend les étapes de :

a) mesure de l'instant de réception d'un premier signal de synchronisation émis par ladite première station,

b) ajustement de ladite référence temporelle par rapport à l'instant de réception dudit premier signal de synchronisation,

c) émission d'un deuxième signal de synchronisation vers ladite première station,

d) réception d'un premier intervalle temporel transmis par ladite première station,

e) mesure de l'instant de réception d'un troisième signal de synchronisation émis par ladite première station et de l'instant de réception d'un quatrième signal de synchronisation émis par ledit terminal utilisateur, et calcul d'un deuxième intervalle temporel à partir de ces instants de réception,

f) calcul d'un troisième intervalle temporel à partir dudit premier intervalle temporel et dudit deuxième intervalle temporel, et

g) lors de l'émission de données par la seconde station à destination du terminal utilisateur, décalage des instants d'émission d'une durée égale au troisième intervalle temporel.

L'invention consiste également en un procédé de synchronisation de la transmission de messages dans un système de communication comprenant un terminal utilisateur, un réseau principal de communication vers ledit terminal utilisateur comprenant une première station, et un réseau secondaire de communication vers ledit terminal utilisateur comprenant une seconde station, destiné à être exécuté sur ledit terminal utilisateur comportant une référence temporelle, caractérisé en ce qu'il comprend les étapes de :

I) mesure de l'instant de réception d'un premier signal de synchronisation émis par ladite première station,

II) ajustement de ladite référence temporelle par rapport à l'instant de réception dudit premier signal de synchronisation,

III) émission d'un deuxième signal de synchronisation vers ladite première station, et

IV) émission d'un troisième signal de synchronisation vers ladite seconde station.

L'invention consiste également en un procédé général de synchronisation de la transmission de messages dans un système de communication comprenant un terminal utilisateur, un réseau principal de communication vers ledit terminal utilisateur comprenant une première station, et un réseau secondaire de communication vers ledit terminal utilisateur comprenant une seconde station, lesdits première station, seconde station et terminal utilisateur comprenant chacun une référence temporelle, ledit procédé étant caractérisé en ce qu'il comprend les étapes de :

- émission, par ladite première station, d'un premier signal de synchronisation vers ladite seconde station et ledit terminal utilisateur,
- mesure, par ladite seconde station et ledit terminal utilisateur, des instants de réception dudit premier signal de synchronisation,
- ajustement des références temporelles de ladite seconde station et dudit terminal utilisateur, à partir des instants de réception dudit premier signal de synchronisation,
- émission, par ledit terminal utilisateur, d'un deuxième signal de synchronisation vers ladite première station,
- émission, par ladite seconde station, d'un troisième signal de synchronisation vers ladite première station,
- mesure, par ladite première station, de l'instant de réception dudit deuxième signal de synchronisation et de l'instant de réception dudit troisième signal de synchronisation, et calcul d'un premier intervalle temporel à partir de ces instants de réception,
- transmission, par ladite première station, dudit premier intervalle temporel calculé vers ladite seconde station,
- émission, par ladite première station, d'un quatrième signal de synchronisation vers ladite seconde station,
- émission, par ledit terminal utilisateur, d'un cinquième signal de synchronisation vers ladite seconde station,
- mesure, par ladite seconde station, de l'instant de réception dudit quatrième signal de synchronisation et de l'instant de réception dudit cinquième signal de synchronisation, et calcul d'un deuxième intervalle temporel à partir de ces instants de réception,
- calcul, par ladite seconde station, d'un troisième intervalle temporel à partir dudit premier intervalle temporel et dudit deuxième intervalle temporel, et
- lors de l'émission de données par la seconde station à destination du terminal utilisateur, décalage des instants d'émission d'une durée égale au troisième intervalle temporel.

Avantageusement, lesdits quatrième et cinquième signaux de synchronisation sont transmis dans un même créneau temporel, ledit créneau temporel désignant un instant d'émission par rapport à la référence temporelle.

Avantageusement, ledit premier intervalle temporel représente une différence entre le temps de transmission du terminal utilisateur vers la première station et le temps de transmission de la seconde station vers la première station.

Avantageusement, ledit deuxième intervalle temporel représente une différence entre l'instant d'arrivée dudit quatrième signal de synchronisation transmis par ladite première station et l'instant d'arrivée dudit cinquième signal de synchronisation transmis par ledit terminal utilisateur.

Avantageusement, ledit troisième intervalle temporel représente un décalage temporel à appliquer pour les émissions de la seconde station, ledit intervalle temporel étant obtenu par sommation entre ledit premier intervalle temporel et ledit deuxième intervalle temporel.

Avantageusement, ledit terminal utilisateur, ladite première station, et ladite seconde station transmettent lesdits signaux de synchronisation sur des fréquences d'émissions différentes.

Avantageusement, lesdits signaux de synchronisation comprennent une heure d'émission.

Avantageusement, les réseaux de communication sont adaptés pour mettre en oeuvre une forme d'onde TDMA.

L'invention consiste également en un système de communication comprenant un terminal utilisateur, un réseau principal de communication vers ledit terminal utilisateur comprenant une première station, et un réseau secondaire de communication vers ledit terminal utilisateur comprenant une seconde station, caractérisé en ce que ladite première station, ladite seconde station, et ledit terminal utilisateur sont configurés pour mettre en oeuvre le procédé de synchronisation de la transmission de messages décrit précédemment.

Avantageusement, le système de communication comprend en outre une passerelle multi-liens en charge de l'acheminement de données vers ladite première station et ladite seconde station.

Avantageusement, ledit premier intervalle temporel est transmis par ladite première station vers ladite seconde station par l'intermédiaire de la passerelle multi-liens.

Avantageusement, le réseau principal de communication est un réseau satellitaire et le réseau secondaire de communication est un réseau terrestre.

L'invention sera mieux comprise et d'autres caractéristiques et avantages apparaîtront mieux à la lecture de la description qui suit, donnée à titre non limitatif, et grâce aux figures annexées parmi lesquelles :

- La figure 1a présente un premier mode de réalisation d'un système de communication selon l'invention,
- La figure 1b présente un second mode de réalisation d'un système de communication selon l'invention,
- La figure 2 présente un diagramme de l'enchaînement temporel de la première partie du procédé selon l'invention,
- La figure 3 présente un diagramme de l'enchaînement temporel de la seconde partie du procédé selon l'invention,
- La figure 4 présente un diagramme de l'enchaînement temporel des émissions dans un système de communication synchronisé selon l'invention,
- La figure 5 illustre les étapes du procédé selon l'invention mises en oeuvre par le réseau principal,
- La figure 6 illustre les étapes du procédé selon l'invention mises en oeuvre par le réseau secondaire,
- La figure 7 illustre les étapes du procédé selon l'invention mises en oeuvre par le terminal utilisateur,

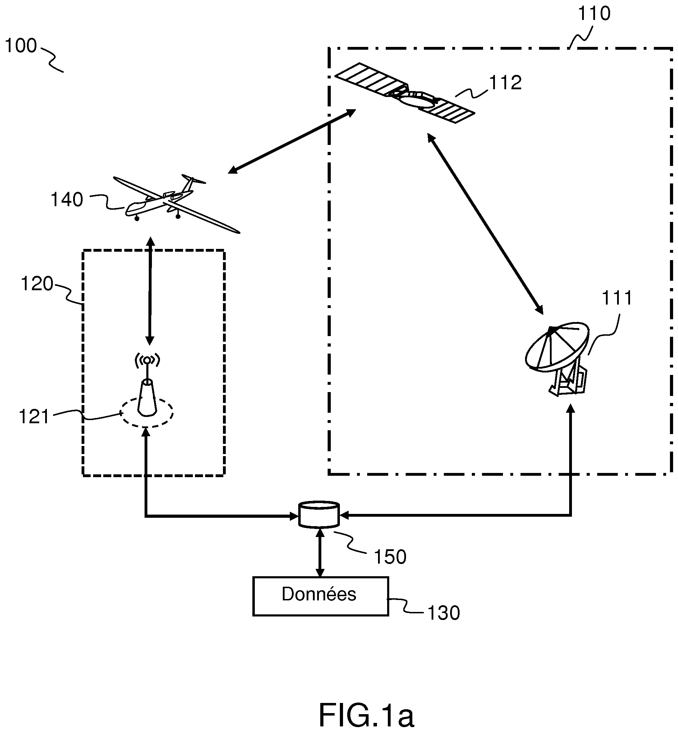

La figure 1a présente un premier mode de réalisation d'un système de communication 100 permettant la mise en oeuvre du procédé selon l'invention. Ce système de communication est composé d'un réseau principal sous la forme d'un réseau satellitaire 110 comprenant une première station 111, la première station étant une station satellite, transmettant des données par le biais d'un satellite 112, et d'un réseau secondaire sous la forme d'un réseau terrestre 120 comprenant une seconde station, la seconde station étant une station terrestre 121. Les deux réseaux permettent d'acheminer des données 130 à destination d'un terminal utilisateur 140, possédant des capacités de communication sur les deux réseaux.

La station satellite, la station terrestre et le terminal utilisateur disposent chacun d'une référence temporelle utilisée lors de la transmission de messages. Cette référence temporelle permet de déterminer les instants d'émission des messages, en faisant le lien entre un créneau temporel (comme par exemple un numéro de trame, un numéro d'intervalle temporel) et une heure d'émission.

Une passerelle multi-lien 150 permet de faire le lien entre le réseau satellitaire et le réseau terrestre.

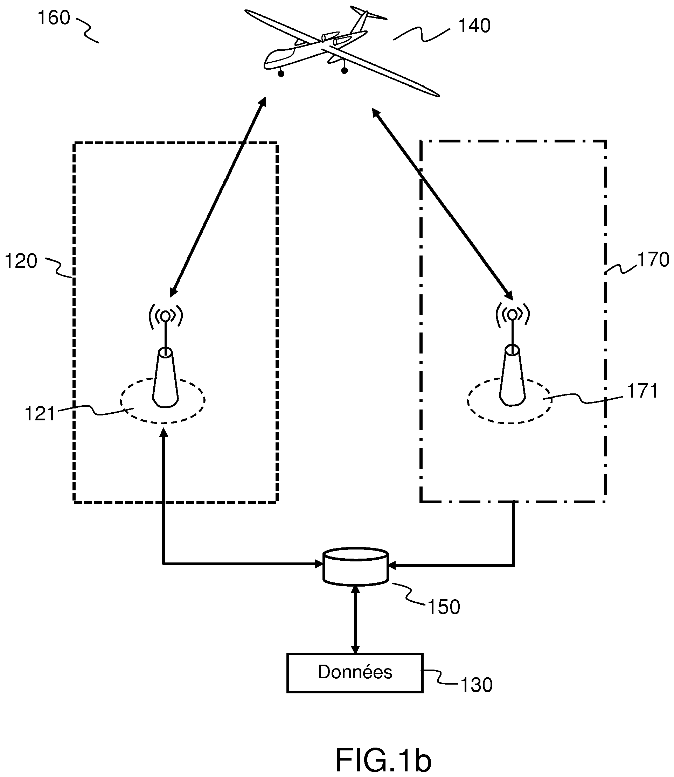

La figure 1b présente un second mode de réalisation d'un système de communication 160 permettant la mise en oeuvre du procédé selon l'invention, dans lequel le réseau secondaire est un réseau terrestre 170 comprenant une station terrestre 171.

Le procédé de synchronisation des instants d'arrivée décrit ici s'applique aux deux modes de réalisation présentés en figure 1a et 1b. La suite de la description fait référence au premier mode de réalisation du système de communication selon l'invention représenté en figure 1a, mais pourrait s'appliquer de manière identique au second mode de réalisation.

Le procédé s'applique également en présence de plus de deux réseaux secondaires, et de plus de deux terminaux utilisateurs.

La mise en oeuvre d'une communication hybride utilisant le réseau terrestre et le réseau satellitaire et nécessitant une synchronisation de la transmission des signaux vers un terminal utilisateur dépend de la position de l'utilisateur et nécessite le calcul d'un décalage temporel à appliquer sur les émissions depuis la station terrestre. Ce décalage temporel est varie pour chacun des terminaux utilisateur.

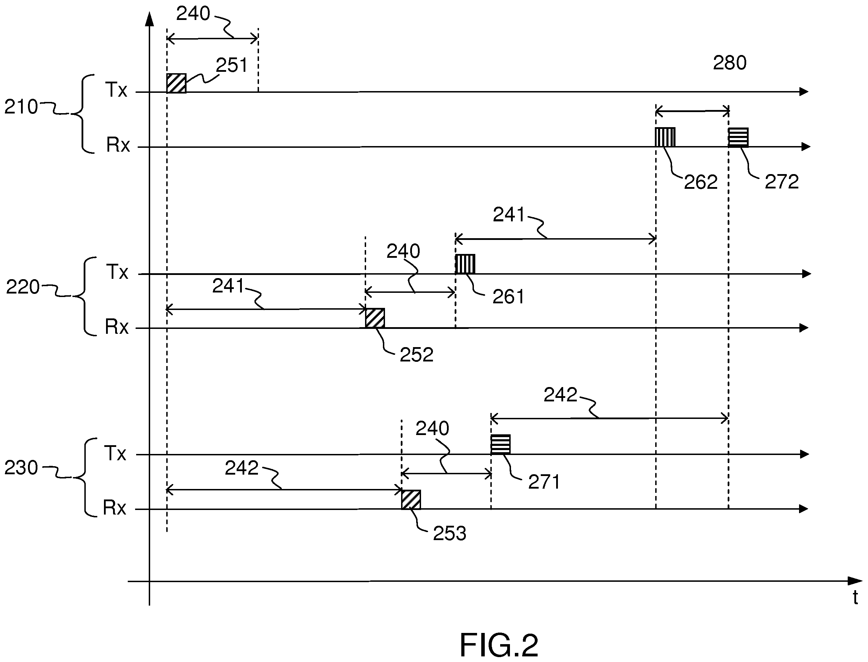

La figure 2 présente un diagramme de l'enchaînement temporel des premières étapes du procédé selon l'invention, permettant de calculer un premier intervalle de temps correspondant à la différence entre le temps de transmission depuis la station satellite vers le terminal utilisateur, et le temps de transmission depuis la station satellite vers la station terrestre.

Le temps de transmission correspond à la durée nécessaire à un message pour passer de la source à la destination. Pour la liaison satellite, ce temps correspond au temps de propagation depuis la station satellite vers le satellite, au temps de propagation depuis la station satellite vers sa destination, et au temps nécessaire au satellite pour réaliser la réception et la réémission du message.

La figure 2 présente en 210 les différentes étapes d'émission (Tx) et de réception (Rx) de messages depuis et vers la station satellite.

De même, elle présente en 220 les différentes étapes d'émission et de réception de messages depuis et vers le terminal utilisateur, et en 230 les différentes étapes d'émission et de réception de messages depuis et vers la station terrestre.

Des signaux dédiés à la synchronisation de l'ensemble du système de communication sont transmis périodiquement dans des créneaux temporels dédiés, ces signaux étant séparés entre eux par un intervalle temporel fixe 240. Cet intervalle peut, par exemple, être lié à la durée d'une trame.

La station satellite émet un premier signal de synchronisation 251. Ce signal est relayé par le satellite, et est reçu par le terminal utilisateur 252 et la station terrestre 253.

Les instants de réception de ce signal de synchronisation dépendent de la distance séparant la station satellite et le terminal utilisateur d'une part, la station satellite et la station terrestre d'autre part, et donc des temps de transmission 241 et 242 associés.

Les signaux de synchronisation étant transmis dans des créneaux temporels connus, le terminal utilisateur et la station terrestre ajustent leurs références temporelles en fonction des instants de réception 252 et 253 de ce premier signal de synchronisation. Ainsi, les émissions suivantes réalisées par le terminal utilisateur et la station terrestre seront réalisées à des instants calculés par rapport à la réception de ce premier signal de synchronisation.

Lors du créneau temporel dédié à la transmission de signalisation suivant, soit après une durée équivalente à l'intervalle temporel 240, le terminal utilisateur émet un deuxième signal de synchronisation 261, et la station terrestre émet un troisième signal de synchronisation 271.

Suivant le positionnement géographique des différents éléments du système de communication, le troisième signal de synchronisation 271 envoyé depuis la station terrestre peut être émis avant ou après le deuxième signal de synchronisation 261 envoyé depuis le terminal utilisateur.

La station satellitaire mesure la différence de temps 280 entre l'instant d'arrivée du second signal de synchronisation 262 et l'instant d'arrivée du troisième signal de synchronisation 272.

Cette différence de temps correspond au double de la différence de temps entre le temps de transmission de la station satellite vers le terminal utilisateur, et le temps de transmission de la station satellite vers la station terrestre, soit 2 * *Satellite Transmission Delay Delta.*

La station satellite calcule ensuite un premier intervalle temporel correspondant à la durée de *Satellite Transmission Delay Delta,* et le transmet à la station terrestre.

Cette transmission peut se faire par le biais des données transmises par la liaison satellitaire, ou en utilisant la passerelle d'accès multi-liens.

Afin d'éviter les collisions entre les signaux de synchronisation issus du terminal utilisateur, de la station satellite et de la station terrestre, chaque équipement utilise une fréquence d'émission qui lui est propre.

Selon un autre mode de mise en oeuvre du procédé, il est possible d'utiliser la même fréquence d'émission pour l'ensemble des équipements, en espaçant temporellement les instants d'émission des deuxième et troisième signaux de synchronisation. Ainsi, le troisième signal de synchronisation peut être émis après une durée équivalente à deux fois l'intervalle temporel 240, la différence de temps entre l'arrivée du deuxième signal de synchronisation valant alors 2 * *Satellite Transmission Delay Delta + intervalle* 240.

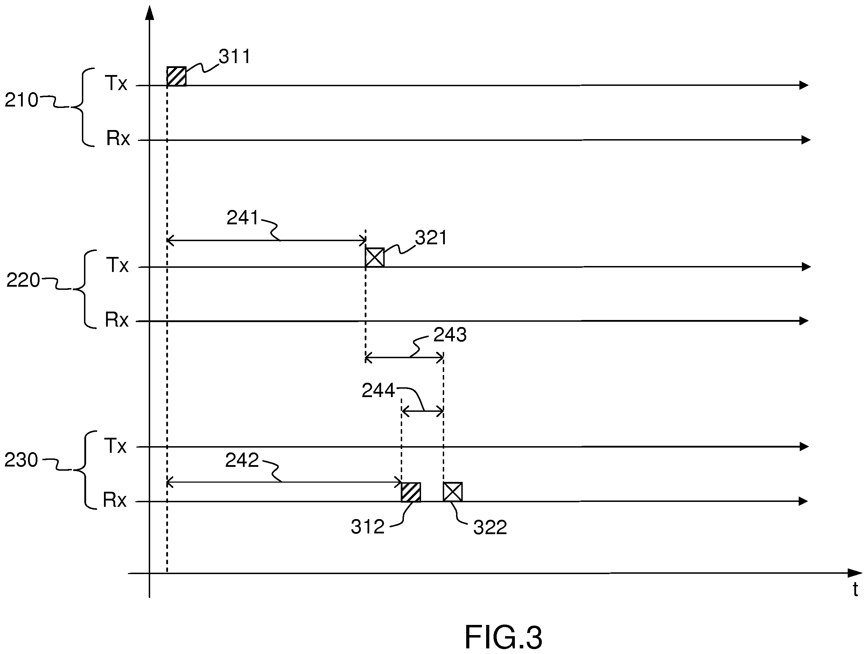

La figure 3 présente un diagramme de l'enchaînement temporel des étapes suivantes du procédé selon l'invention, permettant de calculer un deuxième intervalle de temps correspondant au temps de transmission entre le terminal utilisateur et la station terrestre, puis un troisième intervalle de temps correspondant à un décalage temporel à appliquer par la station terrestre pour les transmissions à destination du terminal utilisateur.

Dans la figure 3, la station satellite émet un quatrième signal de synchronisation 311, qui est reçu en 312 par la station terrestre, avec un retard 242 correspondant au temps de transmission entre la station satellitaire et la station terrestre.

Le terminal utilisateur émet un cinquième signal de synchronisation 321 durant le même créneau temporel que le quatrième signal de synchronisation. Le créneau temporel correspond à une heure d'émission du signal exprimée sous la forme d'un identifiant de trame et d'un identifiant d'un intervalle de temps à l'intérieur de la trame. La référence temporelle du terminal utilisateur, qui lui permet d'associer ce créneau temporel à un instant d'émission, étant positionnée par rapport à l'instant de réception du premier signal de synchronisation transmis par la station satellitaire, l'heure d'émission du message est décalée d'une durée 241 correspondant au temps de transmission entre la station satellite et le terminal utilisateur. La station terrestre reçoit le cinquième signal de synchronisation 322 avec un retard 243 correspondant au temps de transmission entre le terminal utilisateur et la station terrestre. La station terrestre détermine un deuxième intervalle temporel 244 correspondant à la différence entre l'instant de réception 312 du quatrième signal de synchronisation depuis la station satellite, et l'instant de réception 322 du cinquième signal de synchronisation depuis le terminal utilisateur, appelé *Satellite/Terminal Utilisateur Delta.*

Tout comme pour la transmission des deuxièmes et troisièmes messages de synchronisation, et afin d'éviter les collisions entre les signaux de synchronisation, chaque équipement utilise une fréquence d'émission qui lui est propre. Selon un autre mode de mise en oeuvre du procédé, il est possible d'utiliser la même fréquence d'émission, en espaçant temporellement les instants d'émission des quatrième et cinquième signaux de synchronisation. Ainsi, le cinquième signal de synchronisation peut être émis après une durée équivalente à l'intervalle temporel 240, cette valeur devant être prise en compte pour le calcul du deuxième intervalle temporel.

La station terrestre calcule alors un troisième intervalle temporel, somme du premier intervalle temporel et du deuxième intervalle temporel, soit

$$\textit{Satellite Transmission Delay Delta} + \textit{Satellite/Terminal Utilisateur Delta.}$$

Ce troisième intervalle temporel correspond à un décalage temporel devant être appliqué par la station terrestre à sa référence temporelle pour l'émission des prochains messages, permettant ainsi aux signaux transmis depuis la station satellite et aux signaux transmis depuis la station terrestre d'arriver au terminal utilisateur synchronisés temporellement.

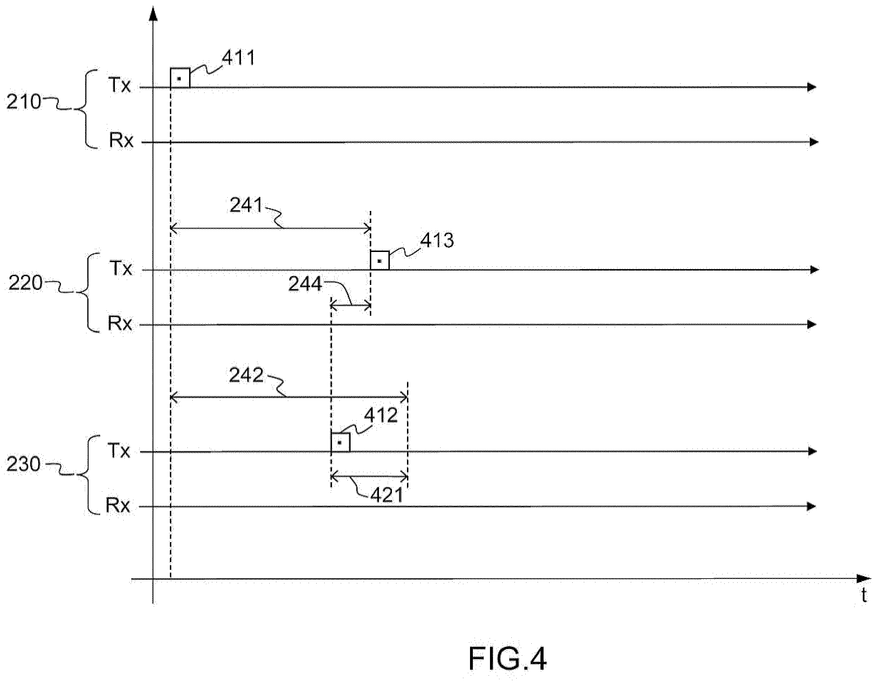

La figure 4 présente un diagramme de l'enchaînement temporel des émissions dans un système de communication synchronisé selon l'invention. Dans la figure 4, des données sont destinées à être transmises simultanément vers un terminal utilisateur par le biais d'un réseau satellite et d'un réseau terrestre.

Les données 411 sont émises par la station satellitaire, à un créneau temporel prédéterminé.

La station sol est programmée pour émettre également les mêmes données 412 pendant le même créneau temporel selon sa propre référence temporelle, décalée d'une durée égale à la valeur du troisième intervalle.

Par construction, la référence temporelle de la station terrestre et la référence temporelle de la station satellite sont décalées d'un intervalle 242 correspondant au temps de transmission entre les deux stations. L'émission des données est donc réalisée avec un décalage correspondant à l'intervalle 242, moins une durée 421 correspondant au troisième intervalle temporel calculé précédemment.

Les données 411 émises depuis la station satellite atteignent le terminal utilisateur après un temps 241 correspondant au temps de transmission entre ces deux équipements.

Les données 412 émises depuis la station terrestre atteignent le terminal utilisateur après une durée 244 correspondant au temps de transmission entre ces deux équipements.

Dans le système synchronisé tel que décrit dans l'invention, les données 411 et 412 atteignent le terminal utilisateur au même moment 413, ce qui permet d'utiliser des réseaux d'accès contraints temporellement utilisant alternativement l'un ou l'autre des réseaux, ou de transmettre simultanément depuis les deux réseaux en utilisant des formes d'onde dont la tolérance aux multitrajets est limitée.

Le procédé décrit est destiné à être mis en oeuvre sur des dispositifs de calcul temps réel répartis entre une station satellite 111, une station terrestre 121 et un terminal utilisateur 140. Ces dispositifs peuvent être divers éléments matériels et/ou logiciels, comme par exemple des programmes d'ordinateurs ou des circuits électronique dédiés.

Le procédé peut être exécuté par une machine de calcul reprogrammable (un processeur ou un micro contrôleur par exemple) exécutant un programme comprenant une séquence d'instructions, ou par une machine de calcul dédiée (par exemple un ensemble de portes logiques comme un FPGA ou un ASIC, ou tout autre module matériel).

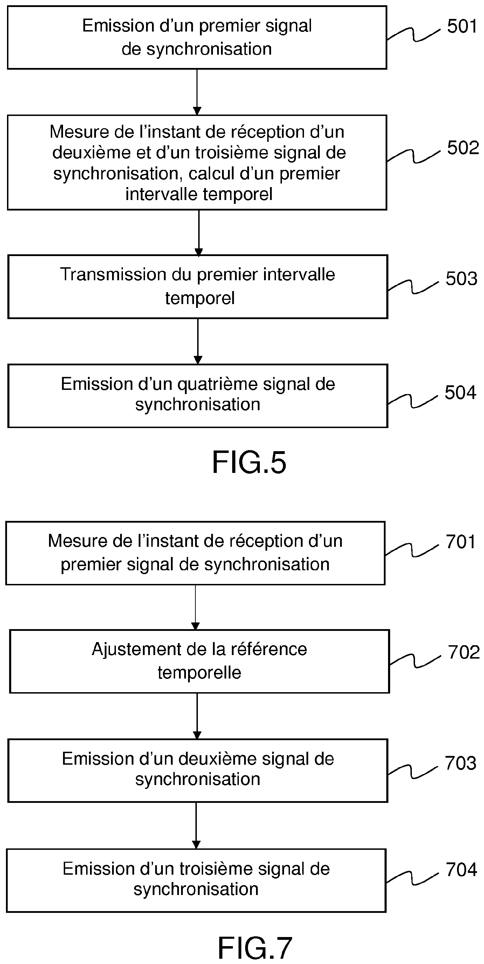

La figure 5 illustre les étapes du procédé selon l'invention mises en oeuvre par le réseau principal, ou réseau satellite.

La mise en oeuvre du procédé sur la station satellite comprend :

- Une étape 501 d'émission d'un premier signal de synchronisation 251, vers la station terrestre et le terminal utilisateur,
- Une étape 502 de mesure de l'instant de réception d'un deuxième signal de synchronisation 262, le deuxième signal de synchronisation étant transmis par la station terrestre à la suite de la réception du premier signal de synchronisation, de mesure de l'instant de réception d'un troisième signal de synchronisation 272, le troisième signal de synchronisation étant transmis par la station terrestre à la suite de la réception du premier signal de synchronisation, et de calcul d'un premier intervalle temporel, à partir des deux instants de réception mesurés,
- Une étape 503 de transmission de ce premier intervalle temporel à destination de la station terrestre, et
- Une étape 504 d'émission d'un quatrième signal de synchronisation 311. Ce quatrième signal est transmis à un instant prédéfini, dans le même créneau temporel que le signal de synchronisation 321 transmis par le terminal utilisateur.

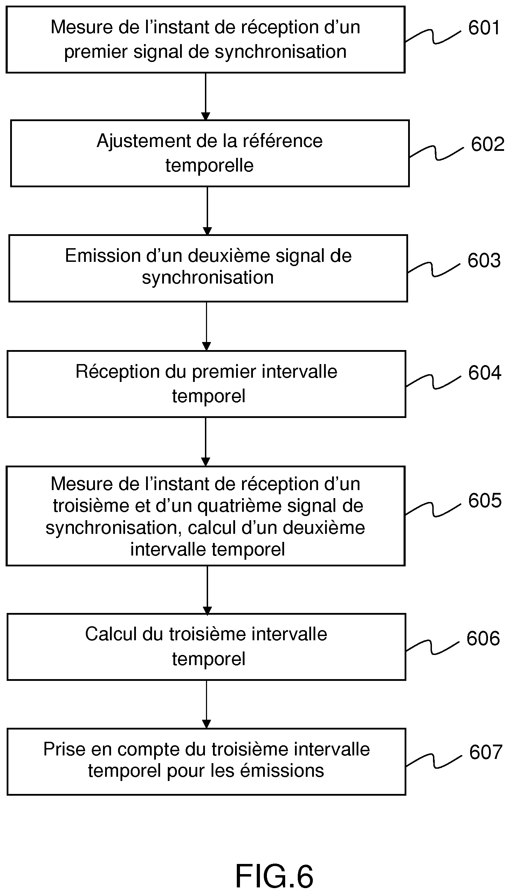

La figure 6 illustre les étapes du procédé selon l'invention mises en oeuvre par le réseau secondaire, ou réseau terrestre.

La mise en oeuvre du procédé sur la station terrestre comprend :

- Une étape 601 de mesure de l'instant de réception d'un premier signal de synchronisation 253, le premier signal de synchronisation étant transmis par la station satellite,
- Une étape 602 de mise à jour de la référence temporelle, ou heure d'émission, de la station terrestre,
- Une étape 603 d'émission d'un deuxième signal de synchronisation 271, vers la station satellite,
- Une étape 604 de réception du premier intervalle temporel transmis par la station satellite,
- Une étape 605 de mesure de l'instant de réception d'un troisième signal de synchronisation 312, le troisième signal de synchronisation étant transmis par la station satellite, de mesure de l'instant de réception d'un quatrième signal de synchronisation 322, le quatrième signal de synchronisation étant transmis par le terminal utilisateur, et de calcul d'un deuxième intervalle temporel 244, à partir des deux instants de réception mesurés,
- Une étape 606 de calcul d'un troisième intervalle temporel, à partir du premier intervalle temporel reçu lors de l'étape 604, et du deuxième intervalle temporel calculé lors de l'étape 605, et
- Une étape 607 itérative de prise en compte d'un décalage d'une durée égale au troisième intervalle temporel, lors de l'émission de messages futurs à destination du terminal utilisateur.

La figure 7 illustre les étapes du procédé selon l'invention mises en oeuvre par le terminal utilisateur.

La mise en oeuvre du procédé sur le terminal utilisateur comprend :

- Une étape 701 de mesure de l'instant de réception d'un premier signal de synchronisation 252, le premier signal de synchronisation étant transmis par la station satellite,
- Une étape 702 de mise à jour de la référence temporelle, ou heure d'émission, du terminal utilisateur,
- Une étape 703 d'émission d'un deuxième signal de synchronisation 261 vers la station terrestre, et
- Une étape 704 d'émission d'un troisième signal de synchronisation 321. Ce troisième signal est transmis à un instant prédéfini, dans le même créneau temporel que le signal de synchronisation 311 émis par la station satellite, et décrit dans l'étape 504.

Le système de transmission présenté dans la figure 1a, présente une passerelle multi-liens 150. Cette passerelle, qui n'intervient pas dans le procédé de synchronisation, est chargée de recevoir les paquets de données depuis le réseau extérieur, et de les transmettre à la station satellite et à la station terrestre.

Cette passerelle gère le séquencement des paquets à envoyer sur chaque réseau. En particulier, elle transmet les paquets associés à une heure d'émission aux différentes stations du système de communication, l'heure d'émission pouvant correspondre à un numéro de trame et de créneau temporel auquel la transmission doit avoir lieu.

La solution apportée permet donc d'asservir la référence temporelle de transmission d'une station terrestre à un signal de synchronisation de référence diffusé par une station satellite de manière à ce que les signaux transmis par la station terrestre et par la station satellite soient reçus de manière synchrone au niveau du récepteur du terminal utilisateur hybride satellite/terrestre.

L'invention permet par exemple d'utiliser des modes d'accès de type TDMA ou WCDMA sans risques d'interférences entre les signaux transmis depuis chacun des réseaux. Elle permet également de transmettre simultanément des signaux depuis une station terrestre et une station satellite, ce qui permet, pour des puissances reçues identiques, d'apporter un gain théorique de diversité spatiale de 3dB sur le bilan de liaison.

En outre comme les deux systèmes d'accès transmettent de manière simultanée vers le terminal utilisateur, la défaillance ou l'indisponibilité temporaire d'un des systèmes d'accès ne se traduit pas par une perte du service mais juste par une dégradation des conditions de réception. L'architecture proposée améliore donc la disponibilité et la continuité du service, par rapport à une architecture classique utilisant un seul réseau d'accès.

**Revendications**

1. Procédé de synchronisation de la transmission de messages dans un système de communication comprenant un terminal utilisateur (140), un réseau principal (110) de communication vers ledit terminal utilisateur comprenant une première station (111), et un réseau secondaire (120) de communication vers ledit terminal utilisateur comprenant une seconde station (121), lesdits première station, seconde station et terminal utilisateur comprenant chacun une référence temporelle, ledit procédé étant **caractérisé en ce qu'**il comprend les étapes de :

- émission, par ladite première station, d'un premier signal de synchronisation (251) vers ladite seconde station et ledit terminal utilisateur,
- mesure, par ladite seconde station et ledit terminal utilisateur, des instants de réception dudit premier signal de synchronisation (252 et 253),
- ajustement des références temporelles de ladite seconde station et dudit terminal utilisateur, à partir des instants de réception dudit premier signal de synchronisation,
- émission, par ledit terminal utilisateur, d'un deuxième signal de synchronisation (252) vers ladite première station,
- émission, par ladite seconde station, d'un troisième signal de synchronisation (253) vers ladite première station,
- mesure, par ladite première station, de l'instant de réception dudit deuxième signal de synchronisation (262) et de l'instant de réception dudit troisième signal de synchronisation (272), et calcul d'un premier intervalle temporel à partir de ces instants de réception,
- transmission, par ladite première station, dudit premier intervalle temporel calculé vers ladite seconde station,
- émission, par ladite première station, d'un quatrième signal de synchronisation (311) vers ladite seconde station,
- émission, par ledit terminal utilisateur, d'un cinquième signal de synchronisation (321) vers ladite seconde station,
- mesure, par ladite seconde station, de l'instant de réception dudit quatrième signal de synchronisation (312) et de l'instant de réception dudit cinquième signal de synchronisation (322), et calcul d'un deuxième intervalle temporel à partir de ces instants de réception,
- calcul, par ladite seconde station, d'un troisième intervalle temporel à partir dudit premier intervalle temporel et dudit deuxième intervalle temporel, et
- lors de l'émission de données par la seconde station à destination du terminal utilisateur, décalage des instants d'émission d'une durée égale au troisième intervalle temporel.

2. Procédé de synchronisation selon la revendication 1 dans laquelle lesdits quatrième et cinquième signaux de synchronisation sont transmis dans un même créneau temporel, ledit créneau temporel désignant un instant d'émission par rapport à la référence temporelle.

3. Procédé de synchronisation selon l'une des revendications 1 et 2, dans lequel ledit premier intervalle temporel représente une différence entre le temps de transmission du terminal utilisateur vers la première station et le temps de transmission de la seconde station vers la première station.

4. Procédé de synchronisation selon l'une des revendications 1 à 3, dans lequel ledit deuxième intervalle temporel représente une différence entre l'instant d'arrivée dudit quatrième signal de synchronisation (312) transmis par ladite première station et l'instant d'arrivée dudit cinquième signal de synchronisation (322) transmis par ledit terminal utilisateur.

5. Procédé de synchronisation selon l'une des revendications 1 à 4, dans lequel ledit troisième intervalle temporel représente un décalage temporel à appliquer pour les émissions de la seconde station, ledit intervalle temporel étant obtenu par sommation entre ledit premier intervalle temporel et ledit deuxième intervalle temporel.

6. Procédé de synchronisation selon l'une des revendications précédentes, dans lequel ledit terminal utilisateur, ladite première station, et ladite seconde station transmettent lesdits signaux de synchronisation sur des fréquences d'émissions différentes.

7. Procédé de synchronisation selon l'une des revendications précédentes, dans lequel lesdits signaux de synchronisation comprennent une heure d'émission.

8. Procédé de synchronisation selon l'une des revendications précédentes, dans lequel les réseaux de communication sont adaptés pour mettre en oeuvre une forme d'onde TDMA.

9. Système de communication comprenant un terminal utilisateur (140), un réseau principal de communication vers ledit terminal utilisateur (110) comprenant une première station (111), et un réseau secondaire de communication vers ledit terminal utilisateur (120) comprenant une seconde station(121), **caractérisé en ce que** ladite première station, ladite seconde station, et ledit terminal utilisateur sont configurés pour mettre en oeuvre le procédé de synchronisation de la transmission de messages décrit dans la revendication 1.

10. Système de communication selon la revendication 9 comprenant en outre une passerelle multi-liens (150) en charge de l'acheminement de données vers ladite première station et ladite seconde station.

11. Système de communication selon la revendication 10 dans laquelle ledit premier intervalle temporel est transmis par ladite première station vers ladite seconde station par l'intermédiaire de la passerelle multi-liens (150).

12. Système de communication selon l'une des revendications 9 à 11 dans lequel le réseau principal de communication (110) est un réseau satellitaire et le réseau secondaire de communication (120) est un réseau terrestre.

13. Station (111) appartenant à un réseau principal (110) de communication vers un terminal utilisateur (140) dans un système de communication comprenant en outre un réseau secondaire (120) de communication vers ledit terminal utilisateur, ledit réseau secondaire de communication comprenant une seconde station (121), ladite station étant **caractérisée en ce qu'**elle est configurée pour exécuter les étapes propres à la première station d'un procédé de synchronisation de la transmission des messages selon l'une des revendications 1 à 8, à savoir les étapes de :

> 1) émission (501) d'un premier signal de synchronisation (251) vers ledit terminal utilisateur et ladite seconde station,
> 2) mesure (502) de l'instant de réception d'un deuxième signal de synchronisation (262) émis par le terminal utilisateur suite à la réception dudit premier signal de synchronisation, et d'un troisième signal de synchronisation (272) émis par la seconde station suite à la réception dudit premier signal de synchronisation, et calcul d'un premier intervalle temporel à partir de ces instants de réception,
> 3) transmission (503) dudit premier intervalle temporel calculé vers ladite seconde station, et
> 4) émission (504) d'un quatrième signal de synchronisation (311) vers ladite seconde station.

14. Station (121) appartenant à un réseau secondaire (120) de communication vers un terminal utilisateur (140) dans un système de communication comprenant en outre un réseau principal (110) de communication vers ledit terminal utilisateur, ledit réseau principal de communication comprenant une première station (111), ladite station étant **caractérisée en ce qu'**elle est configurée pour exécuter les étapes propres à la seconde station dans un procédé de synchronisation de la transmission des messages selon l'une des revendications 1 à 8, à savoir les étapes de :

> a) mesure (601) de l'instant de réception d'un premier signal de synchronisation (253) émis par ladite première station,
> b) ajustement (602) de ladite référence temporelle par rapport à l'instant de réception dudit premier signal de synchronisation,
> c) émission (603) d'un deuxième signal de synchronisation (271) vers ladite première station,
> d) réception (604) d'un premier intervalle temporel transmis par ladite première station,
> e) mesure (605) de l'instant de réception d'un troisième signal de synchronisation (312) émis par ladite première station et de l'instant de réception d'un quatrième signal de synchronisation (322) émis par ledit terminal utilisateur, et calcul d'un deuxième intervalle temporel à partir de ces instants de réception,
> f) calcul (606) d'un troisième intervalle temporel à partir dudit premier intervalle temporel et dudit deuxième intervalle temporel, et
> g) lors de l'émission de données par la seconde station à destination du terminal utilisateur, décalage (607) des instants d'émission d'une durée égale au troisième intervalle temporel.

15. Terminal utilisateur (140) dans un système de communication comprenant un réseau principal (110) de communication vers ledit terminal utilisateur, ledit réseau principal comprenant une première station (111), et un réseau secondaire (120) de communication vers ledit terminal utilisateur, ledit réseau secondaire comprenant une seconde station (121), ledit terminal utilisateur étant **caractérisé en ce qu'**il est configuré pour exécuter les étapes propres au terminal utilisateur dans un procédé de synchronisation de la transmission des messages selon l'une des revendications 1 à 8, à savoir les étapes de :

> I) mesure (701) de l'instant de réception d'un premier signal de synchronisation (252) émis par ladite première station,
> II) ajustement (702) de ladite référence temporelle par rapport à l'instant de réception dudit premier signal de synchronisation,
> III) émission (703) d'un deuxième signal de synchronisation (261) vers ladite première station, et

IV) émission (704) d'un troisième signal de synchronisation (321) vers ladite seconde station.

**Patentansprüche**

1. Verfahren zum Synchronisieren der Übertragung von Nachrichten in einem Kommunikationssystem, umfassend ein Benutzerendgerät (140), ein Hauptnetzwerk (110) zur Kommunikation mit dem Benutzerendgerät, das eine erste Station (111) umfasst, und ein sekundäres Netzwerk (120) zur Kommunikation mit dem Benutzerendgerät, das eine zweite Station (121) umfasst, wobei die erste Station, die zweite Station und das Benutzerendgerät jeweils eine Zeitreferenz umfassen, wobei das Verfahren **dadurch gekennzeichnet ist, dass** es die folgenden Schritte beinhaltet:

   • Senden eines ersten Synchronisationssignals (251) durch die erste Station zu der zweiten Station und dem Benutzerendgerät,
   • Messen der Empfangszeitpunkte des ersten Synchronisationssignals (252 und 253) durch die zweite Station und das Benutzerendgerät,
   • Einstellen der Zeitreferenzen der zweiten Station und des Benutzerendgerätes ab den Zeitpunkten des Eingangs des ersten Synchronisationssignals,
   • Senden eines zweiten Synchronisationssignals (252) durch das Benutzerendgerät zur ersten Station,
   • Senden eines dritten Synchronisationssignals (253) durch die zweite Sation zur ersten Station,
   • Messen, durch die erste Station, des Empfangszeitpunkts des zweiten Synchronisationssignals (262) und des Empfangszeitpunkts des dritten Synchronisationssignals (272) und Berechnen eines ersten Zeitintervalls von diesen Empfangszeitpunkten,
   • Übertragen des berechneten ersten Intervalls durch die erste Station zur zweiten Station,
   • Senden eines vierten Synchronisationssignals (311) durch die erste Station zur zweiten Station,
   • Senden eines fünften Synchronisationssignals (321) durch das Benutzerendgerät zur zweiten Station,
   • Messen des Empfangszeitpunkts des vierten Synchronisationssignals (312) und des Empfangszeitpunkts des fünften Synchronisationssignals (322) durch die zweite Station und Berechnen eines zweiten Zeitintervalls von diesen Empfangszeitpunkten,
   • Berechnen eines dritten Zeitintervalls durch die zweite Station von dem ersten Zeitintervall und dem zweiten Zeitintervall, und
   • Verschieben, beim Senden von Daten durch die zweite Station zum Benutzerendgerät, der Sendezeitpunkte um eine Zeitspanne gleich dem dritten Zeitintervall.

2. Synchronisationsverfahren nach Anspruch 1, bei dem das vierte und fünfte Synchronisationssignal im gleichen Zeitschlitz übertragen werden, wobei der Zeitschlitz einen Sendezeitpunkt in Bezug auf die Zeitreferenz designiert.

3. Synchronisationsverfahren nach einem der Ansprüche 1 und 2, wobei das erste Zeitintervall eine Differenz zwischen der Übertragungszeit vom Benutzerendgerät zur ersten Station und der Übertragungszeit von der zweiten Station zur ersten Station darstellt.

4. Synchronisationsverfahren nach einem der Ansprüche 1 bis 3, wobei das zweite Zeitintervall eine Differenz zwischen der Ankunftszeit des übertragenen vierten Synchronisationssignals (312) durch die erste Station und der Ankunftszeit des vom Benutzerendgerät übertragenen fünften Synchronisationssignals (322) darstellt.

5. Synchronisationsverfahren nach einem der Ansprüche 1 bis 4, wobei das dritte Zeitintervall eine anzuwendende Zeitverschiebung für die Sendungen der zweiten Station darstellt, wobei das Zeitintervall durch Summieren zwischen dem ersten Zeitintervall und dem zweiten Zeitintervall erhalten wird.

6. Synchronisationsverfahren nach einem der vorherigen Ansprüche, wobei das Benutzerendgerät, die erste Station und der die zweite Station die Synchronisationssignale auf unterschiedlichen Übertragungsfrequenzen senden.

7. Synchronisationsverfahren nach einem der vorherigen Ansprüche, wobei die Synchronisationssignale eine Sendezeit umfassen.

8. Synchronisationsverfahren nach einem der vorherigen Ansprüche, wobei die Kommunikationsnetze zum Implementieren einer TDMA-Wellenform ausgelegt sind.

9. Kommunikationssystem, umfassend ein Benutzerendgerät (140), ein Hauptnetzwerk zur Kommunikation mit dem Benutzerendgerät (110), das eine erste Station (111) umfasst, und ein sekundäres Netzwerk zur Kommunikation mit dem Benutzerendgerät (120), das eine zweite Station (121) umfasst, **dadurch gekennzeichnet, dass** die erste Station, die zweite Station und das Benutzerendgerät zum Durchführen des Verfahrens zum Synchronisieren der Nachrichtenübertragung wie in Anspruch 1 beschrieben konfiguriert sind.

10. Kommunikationssystem nach Anspruch 9, ferner umfassend ein Multilink-Gateway (150) zur Datenweiterleitung zu der ersten Station und der zweiten Station.

11. Kommunikationssystem nach Anspruch 10, bei dem das erste Zeitintervall von der ersten Station zur zweiten Station über das Multilink-Gateway (150) übertragen wird.

12. Kommunikationssystem nach einem der Ansprüche 9 bis 11, bei dem das Hauptkommunikationsnetz (110) ein Satellitennetzwerk und das sekundäre Kommunikationsnetzwerk (120) ein terrestrisches Netzwerk ist.

13. Station (111), die zu einem Hauptnetzwerk (110) gehört, zur Kommunikation mit einem Benutzerendgerät (140) in einem Kommunikationsystem, ferner umfassend ein sekundäres Netzwerk (120) zur Kommunikation mit dem Benutzerendgerät, wobei das sekundäre Kommunikationsnetzwerk eine zweite Station (121) umfasst, wobei die Station **dadurch gekennzeichnet ist, dass** sie zum Ausführen der für die erste Station spezifischen Schritte eines Verfahrens zum Synchronisieren der Übertragung von Nachrichten nach einem der Ansprüche 1 bis 8 konfiguriert ist, nämlich die folgenden Schritte:

1) Senden (501) eines ersten Synchronisationssignals (251) zu dem Benutzerendgerät und der zweiten Station,
2) Messen (502) des Empfangszeitpunkts eines zweiten Synchronisationssignals (262), das vom Benutzerendgerät nach dem Empfang des ersten Synchronisationssignals gesendet wurde, und eines dritten Synchronisationssignals (272), das von der zweiten Station nach dem Empfang des ersten Synchronisationssignals gesendet wurde, und Berechnen eines ersten Zeitintervalls von diesen Empfangszeitpunkten,
3) Übertragen (503) des ersten berechneten Zeitintervalls zur zweiten Station, und
4) Senden (504) eines vierten Synchronisationssignals (311) zur zweiten Station.

14. Station (121), die zu einem sekundären Netzwerk (120) gehört, zur Kommunikation mit einem Benutzerendgerät (140) in einem Kommunikationssystem, ferner umfassend ein Hauptnetzwerk (110) zur Kommunikation mit dem Benutzerendgerät, wobei das Kommunikationsauptnetz eine erste Station (111) umfasst, wobei die Station **dadurch gekennzeichnet ist, dass** sie zum Ausführen der für die zweite Station spezifischen Schritte in einem Verfahren zum Synchronisieren der Übertragung von Nachrichten nach einem der Ansprüche 1 bis 8 konfiguriert ist, nämlich der folgenden Schritte:

(a) Messen (601) des Empfangszeitpunkts eines von der ersten Station gesendeten ersten Synchronisationssignals (253),
(b) Einstellen (602) der Zeitreferenz in Bezug auf die Empfangszeit des ersten Synchronisationssignals,
c) Senden (603) eines zweiten Synchronisationssignals (271) zur ersten Station,
d) Empfangen (604) eines von der ersten Station übertragenen ersten Zeitintervalls,
e) Messen (605) des Empfangszeitpunkts eines von der ersten Station gesendeten dritten Synchronisationssignals (312) und des Empfangszeitpunkts eines vom Benutzerendgerät gesendeten vierten Synchronisationssignals (322) und Berechnen eines zweiten Zeitintervalls von diesen Empfangszeitpunkten,
f) Berechnen (606) eines dritten Zeitintervalls von dem ersten Zeitintervall und dem zweiten Zeitintervall, und
(g) Verschieben (607) der Sendezeitpunkte beim Senden von Daten von der zweiten Station zum Benutzerendgerät um eine Zeitspanne gleich dem dritten Zeitintervall.

15. Benutzerendgerät (140) in einem Kommunikationssystem, umfassend ein Hauptnetzwerk (110) zur Kommunikation mit dem Benutzerendgerät, wobei das Hauptnetzwerk eine erste Station (111) umfasst, und einem sekundären Netzwerk (120) zur Kommunikation mit dem Benutzerendgerät, wobei das sekundäre Netzwerk eine zweite Station (121) umfasst, wobei das Benutzerendgerät **dadurch gekennzeichnet ist, dass** es zum Durchführen der für das Benutzerendgerät spezifischen Schritte in einem Verfahren zum Synchronisieren der Übertragung von Nachrichten nach einem der Ansprüche 1 bis 8 konfiguriert ist, nämlich der folgenden Schritte:

I) Messen (701) des Empfangszeitpunkts eines von der ersten Station gesendeten ersten Synchronisationssignals (252),

II) Einstellen (702) der Zeitreferenz in Bezug auf den Empfangszeitpunkt des ersten Synchronisationssignals,
III) Senden (703) eines zweiten Synchronisationssignals (261) zur ersten Station, und
IV) Senden (704) eines dritten Synchronisationssignals (321) zur zweiten Station.

**Claims**

1. A method for synchronizing the transmission of messages in a communication system including a user terminal (140), a main communication network (110) to the user terminal having a first station (111), and a secondary communication network (120) to the user terminal having a second station (121), the first station, the second station and the user terminal each having a temporal reference, said method being **characterized in that** it comprises the steps of:

   • emitting, by the first station, a first synchronization signal (251) to the second station and the user terminal,
   • measuring, by the second station and the user terminal, the instants of reception of the first synchronization signal (252 and 253),
   • adjusting the temporal references of the second station and of the user terminal, on the basis of the instants of reception of the first synchronization signal,
   • emitting, by the user terminal, a second synchronization signal (252) to the first station,
   • emitting, by the second station, a third synchronization signal (253) to the first station,
   • measuring, by the first station, the instant of reception of the second synchronization signal (262) and the instant of reception of the third synchronization signal (272), and calculating a first time interval on the basis of these instants of reception,
   • transmitting, by the first station, the first calculated time interval to the second station,
   • emitting, by the first station, a fourth synchronization signal (311) to the second station,
   • emitting, by the user terminal, a fifth synchronization signal (321) to the second station,
   • measuring, by the second station, the instant of reception of the fourth synchronization signal (312) and the instant of reception of the fifth synchronization signal (322), and calculating a second time interval on the basis of these instants of reception,
   • calculating, by the second station, a third time interval on the basis of the first time interval and of the second time interval, and
   • upon the emission of data by the second station to the user terminal, shifting of the instants of emission by a duration equal to the third time interval.

2. The method of synchronization according to claim 1, wherein the fourth and the fifth synchronization signals are transmitted in one and the same time slot, the time slot designating an instant of emission with respect to the temporal reference.

3. The method of synchronization according to any of claims 1 and 2, wherein the first time interval represents a difference between the time of transmission of the user terminal to the first station and the time of transmission of the second station to the first station.

4. The method of synchronization according to any of claims 1 to 3, wherein the second time interval represents a difference between the instant of arrival of the fourth synchronization signal (312) transmitted by the first station and the instant of arrival of the fifth synchronization signal (322) transmitted by the user terminal.

5. The method of synchronization according to any one of claim 1 to 4, wherein the third time interval represents a time shift to be applied in respect of the emissions of the second station, the time interval being obtained by summation between the first time interval and the second time interval.

6. The method of synchronization according to one of the preceding claims, wherein said user terminal, said first station, and said second station transmit said synchronization signals on different emission frequencies.

7. The method of synchronization according to one of the preceding claims, wherein said synchronization signals comprise a transmission time.

8. The method of synchronization according to one of the preceding claims, wherein the communication networks are adapted to implement a TDMA waveform.

9. A communication system comprising a user terminal (140), a main communication network to said user terminal (110) comprising a first station (111), and a secondary communication network to said user terminal (120) comprising a second station (121), **characterized in that** said first station, said second station, and said user terminal are configured to implement the method of synchronization of the transmission of messages described in claim 1.

10. The communication system of claim 9, further comprising a multi-link gateway (150) responsible for routing data to said first station and said second station.

11. The communication system of claim 10, wherein said first time slot is transmitted from said first station to said second station through the multi-link gateway (150).

12. The communication system according to one of claims 9 to 11, wherein the main communication network (110) is a satellite network and the secondary communication network (120) is a terrestrial network.

13. Station (111), belonging to a main network (110) for communication to a user terminal (140) in a communication system, further comprising a secondary network (120) for communication to said user terminal, said secondary communication network comprising a second station (121), said station being **characterized in that** it is configured to execute the steps specific to the first station of a method of synchronization of the transmission of messages according to one of claims 1 to 8, namely the steps of:

1) transmitting (501) a first synchronization signal (251) to said user terminal and said second station,
2) measuring (502) the instant of reception of a second synchronization signal (262) emitted by the user terminal following the reception of said first synchronization signal, and a third synchronization signal (272) emitted by the second station after receiving said first synchronization signal, and calculating a first time interval from these instants of reception,
3) transmitting (503) said first calculated time interval to said second station, and
4) transmitting (504) a fourth synchronization signal (311) to said second station.

14. Station (121) belonging to a secondary network (120) for communication to a user terminal (140) in a communication system, further comprising a main communication network (110) to said user terminal, said main communication network comprising a first station (111), said station being **characterized in that** it is configured to execute the steps specific to the second station in a method of synchronization of the transmission of messages according to one of claims 1 to 8, namely the steps of:

a) measuring (601) the instant of reception of a first synchronization signal (253) emitted by said first station,
b) adjusting (602) said time reference with respect to the instant of reception of said first synchronization signal,
c) transmitting (603) a second synchronization signal (271) to said first station,
d) receiving (604) a first time interval transmitted by said first station,
e) measuring (605) the instant of reception of a third synchronization signal (312) emitted by said first station and of the instant of reception of a fourth synchronization signal (322) emitted by said user terminal, and calculating a second time interval from these instants of reception,
f) calculating (606) a third time interval from said first time interval and said second time interval, and
g) upon emission of data by the second station to the user terminal, shifting (607) of the instants of emission by a duration equal to the third time interval.

15. User terminal (140) in a communication system comprising a main network (110) for communication to said user terminal, said main network comprising a first station (111), and a secondary network (120) for communication to said user terminal, said secondary network comprising a second station (121), said user terminal being **characterized in that** it is configured to execute the steps specific to the user terminal in a method for synchronizing the transmission of messages according to one of the claims 1 to 8, namely the steps of:

I) measuring (701) the instant of reception of a first synchronization signal (252) emitted by said first station,
II) adjusting (702) said temporal reference with respect to the instant of reception of said first synchronization signal,
III) transmitting (703) a second synchronization signal (261) to said first station, and
IV) transmitting (704) a third synchronization signal (321) to said second station.

100

110

112

140

120

121

111

150

Données

130

FIG.1a

FIG.1b

FIG.2

EP 3 038 275 B1

FIG.3

EP 3 038 275 B1

FIG.4

Emission d'un premier signal
de synchronisation
501

Mesure de l'instant de réception d'un
deuxième et d'un troisième signal de
synchronisation, calcul d'un premier
intervalle temporel
502

Transmission du premier intervalle
temporel
503

Emission d'un quatrième signal de
synchronisation
504

## FIG.5

Mesure de l'instant de réception d'un
premier signal de synchronisation
701

Ajustement de la référence
temporelle
702

Emission d'un deuxième signal de
synchronisation
703

Emission d'un troisième signal de
synchronisation
704

## FIG.7

Mesure de l'instant de réception d'un premier signal de synchronisation — 601

Ajustement de la référence temporelle — 602

Emission d'un deuxième signal de synchronisation — 603

Réception du premier intervalle temporel — 604

Mesure de l'instant de réception d'un troisième et d'un quatrième signal de synchronisation, calcul d'un deuxième intervalle temporel — 605

Calcul du troisième intervalle temporel — 606

Prise en compte du troisième intervalle temporel pour les émissions — 607

FIG.6

## RÉFÉRENCES CITÉES DANS LA DESCRIPTION

**Documents brevets cités dans la description**

- WO 9809390 A1
- US 20090116543 A1
- EP 1819067 A1

**Littérature non-brevet citée dans la description**

- *Hybrid Satellite/Terrestrial Coopérative Relaying Stategies for DVB-SH based Communication Systems*